# DEMANDE DE BREVET EUROPEEN

(11) **EP 1 413 978 A1**
(43) Date de publication de la demande: **28.04.2004**
(21) Numéro de dépôt: 03076180.3
(22) Date de dépôt: 23.04.2003
(51) Int. Cl.: G06K 19/07

(54) **Support de données**

(30) Priorité: 24.10.2002 EP 02292649
(71) Demandeur: SCHLUMBERGER Systèmes, 92120 Montrouge (FR)
(72) Inventeur: Soyer, Alain, 92120 Montrouge (FR); Reignoux, Yves, 92120 Montrouge (FR); Nerot, Dorothée, 92120 Montrouge (FR)

(57) **Abrégé**

Un objet portable comprend un premier support électronique d'information. L'objet portable est caractérisé en ce qu'il comprend un deuxième support électronique d'information.
L'objet portable peut être en particulier une carte au format ISO 7816. Le support électronique d'information peut être, par exemple, une carte SIM.

## Description

La présente invention concerne un objet portable comprenant plusieurs supports électroniques d'information ainsi qu'une méthode de fabrication d'un tel objet portable.
L'objet portable peut être en particulier une carte au format ISO 7816.
Un support électronique d'information comprend un corps support dans lequel est inséré un circuit intégré arrangé pour stocker et/ou traiter des données. Le circuit intégré peut être inclus dans un module. Un module comprend un circuit intégré connecté à des plages de contacts au moyen, par exemple, de fils conducteurs ou de billes conductrices. Les fils conducteurs et le circuit intégré sont généralement enrobés d'une résine protectrice.
Le support électronique d'information peut être, par exemple, une carte SIM (en anglais : Subscriber Identity Module) 2G (2^{ième} génération). Une carte SIM 2G est une partie d'une carte au format ISO 7816 qui se positionne dans un téléphone mobile. Le support électronique d'information peut aussi être une carte USIM 3G (3^{ième} génération).

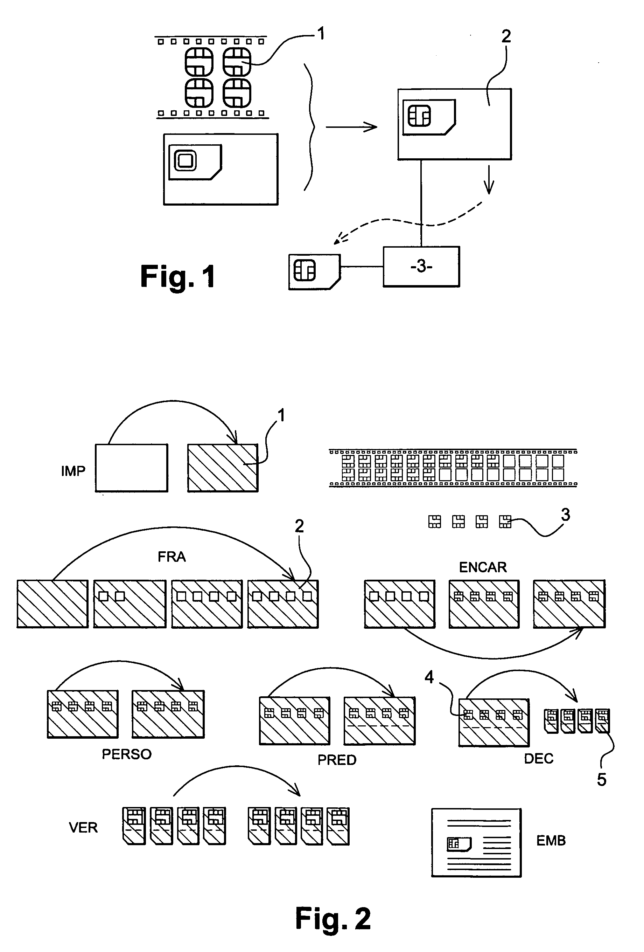

Actuellement comme l'illustre la figure 1, un module (1) est encarté dans une carte (2) dans laquelle est découpée une carte SIM 2G (3). La carte SIM 2G (3) est ensuite personnalisée de façon logicielle et graphique. La carte SIM 2G (3) peut alors être détachée de la carte (2) pour être utilisée.

C'est un objet de l'invention de permettre une réduction de coûts.

Selon un aspect de l'invention, un objet portable comprend un premier support électronique d'information, l'objet portable étant caractérisé en ce qu'il comprend un deuxième support électronique d'information.

L'objet portable peut être en particulier une carte ayant le format d'une carte à puce tel que défini dans la norme ISO 7816. Les supports électronique d'information peuvent être en particulier des cartes SIM 2G. Ainsi plusieurs cartes SIM 2G peuvent être fabriquées à partir d'une même carte. Ceci permet d'économiser de la matière. En outre, le fait d'avoir plusieurs supports électronique d'information sur une même carte permet que les machines fonctionnent à des cadences plus élevées lors des différentes étapes de fabrication. L'invention permet donc de réduire les coûts de fabrication.

A la lumière de la figure 2, afin de mieux comprendre l'invention, nous nous proposons de décrire un mode particulier de réalisation de l'invention.

Dans une étape d'impression IMP, une carte (1), de préférence vierge au départ, est avantageusement imprimée, par exemple d'un visuel publicitaire, afin d'obtenir une carte imprimée. Avantageusement la carte (1) est un parallélépipède rectangle ayant le format d'une carte à puce tel que défini dans la norme ISO 7816.

Dans une étape de création de cavités FRA, quatre cavités (2) sont crées dans la carte imprimée. Les cavités sont crées, par exemple, par fraisage. Avantageusement, une cavité comprend deux sous cavités ; à savoir une première sous cavité formant ce qui est couramment appelé un « trottoir de collage » et une seconde sous cavité pour permettre de loger la partie d'un module qui est enrobé d'une résine protectrice.

Dans une étape d'encartage ENCAR, des modules (3) sont découpés dans une bande de modules pour être insérés dans les cavités de la carte imprimée. Une carte encartée est ainsi obtenue.

Dans une étape de personnalisation PERSO, la carte encartée est personnalisée. L'étape de personnalisation comprend :
- une sous étape de personnalisation logicielle dans laquelle les circuits intégrés des modules sont programmés ; et
- une sous étape de personnalisation graphique dans laquelle les zones correspondant aux corps supports des futurs cartes SIM 2G sont personnalisées graphiquement. Par exemple un numéro d'identification personnel (en anglais : Personal Identification Number ou PIN) peut être imprimé.

Dans une étape de prédécoupe PRED, la carte peut être avantageusement munie d'une ligne de prédécoupe. Cette ligne de prédécoupe permettra ultérieurement de découper les cartes SIM 2G au format d'une carte USIM 3G.

Dans une étape de découpe DEC, quatre cartes SIM 2G sont découpées dans la carte (1).

Dans une étape de vérification VER, l'ordre des cartes SIM 2G personnalisées est vérifié. En effet, une fois personnalisées, les cartes SIM 2G doivent être livrées au client dans l'ordre et sans trous dans la numérotation.

Dans une étape d'emballage EMB, chaque carte SIM 2G est mise dans un encart qui lui est associée. Ainsi le client reçoit non plus une carte SIM 2G insérée dans une carte au format ISO 7816, mais plutôt une carte SIM 2G associée à un encart.

La description ci-dessus illustre un objet portable comprenant un premier support électronique d'information, l'objet portable étant caractérisé en ce qu'il comprend un deuxième support électronique d'information.

La description du mode de réalisation particulier de réalisation illustre plus que limite l'invention. Il est évident que de nombreuses alternatives existent. Dans ce contexte, les remarques suivantes sont faites.

Dans la description ci-dessus, l'objet portable était une carte ayant le format d'une carte à puce tel que défini dans la norme ISO 7816. L'invention concerne tout autre objet portable ayant des dimensions différentes et une forme différente.

Dans l'étape de fraisage FRA, des cavités sont fraisées. D'autres techniques que celle du fraisage peuvent être utilisées. Les cavités peuvent être notamment obtenues par moulage.

En outre, dans le mode de réalisation ci-dessus, une carte (1) comprend quatre cartes SIM 2G. Plus généralement elle concerne des cartes comprenant au moins deux cartes SIM 2G

Notons que dans la description ci-dessus, les cartes SIM 2G sont disposées sur une même face de la carte (1). Mais les cartes SIM 2G pourraient être situées sur les deux faces de la carte (1). Avantageusement une carte (1) pourrait comprendre deux cartes SIM 2G disposées sur chaque face de la carte (1) et en opposition. Ceci permettrait de limiter les modifications machine tout en conservant la configuration standard.

L'étape de prédécoupe PRED, permettant de prédécouper les cartes SIM 2G au format d'une carte USIM 3G, peut avoir lieue avant l'étape de personnalisation. En outre cette étape est une option ; elle n'est pas nécessaire à l'invention.

Notons que dans la description ci-dessus les supports électroniques d'information sont détachables de la carte. Mais l'invention concerne également des cartes comprenant des supports électroniques d'information qui ne sont pas détachables.

## Revendications

1. Objet portable comprenant un premier support électronique d'information, l'objet portable étant **caractérisé en ce qu'**il comprend un deuxième support électronique d'information.

2. Objet portable selon la revendication 1, **caractérisé en ce que** le premier support électronique d'information comprend un corps support dans lequel est inséré un circuit intégré arrangé pour stocker et/ou traiter des données.

3. Objet portable selon la revendication 1, **caractérisé en ce que** le premier support électronique d'information est détachable de l'objet portable.

4. Objet portable selon la revendication 1, **caractérisé en ce que** l'objet portable à la forme d'un parallélépipède rectangle ayant le format d'une carte à puce tel que défini dans la norme ISO 7816.

5. Objet portable selon la revendication 2, **caractérisé en ce que** le premier support électronique d'information est une carte SIM 2G.

6. Objet portable selon la revendication 5, **caractérisé en ce que** la carte SIM 2G comprend une zone prédécoupée.

7. Méthode de fabrication d'un objet portable **caractérisée en ce qu'**elle comprend une étape de création de cavités, dans laquelle une première cavité et une deuxième cavité sont créés dans l'objet portable.

8. Méthode selon la revendication 7, **caractérisée en ce qu'**elle comprend en outre une étape d'encartage dans laquelle des modules sont insérés dans la première cavité et dans la deuxième cavité.

9. Méthode selon la revendication 7, **caractérisée en ce que** les cavités sont crées par fraisage.

10. Méthode selon la revendication 7, **caractérisée en ce que** les cavités sont crées par moulage.
